# EUROPÄISCHE PATENTANMELDUNG

(11) **EP 1 293 757 A1**
(43) Veröffentlichungstag der Anmeldung: **19.03.2003**
(21) Anmeldenummer: 01121841.9
(22) Anmeldetag: 11.09.2001
(51) Int. Cl.: G01C 21/26, G08B 25/10, G08G 1/0968

(54) **Verfahren zum Ermitteln der Position einer mobilen Vorrichtung, insbesondere einer Notrufvorrichtung, Notrufsystem sowie Notrufvorrichtung**

(71) Anmelder: GPP AG, 82039 Oberhaching (DE)
(72) Erfinder: Speiser, Fridolin, 81929 München (DE)
(74) Vertreter: TER MEER STEINMEISTER & PARTNER GbR

(57) **Zusammenfassung**

Die Erfindung betrifft ein Verfahren zum Ermitteln der Position einer mobilen Vorrichtung, insbesondere einer Notrufvorrichtung (11), die ein satellitengestütztes Positionsfeststellmodul (24) sowie eine Sender-Empfänger-Einheit (26) aufweist, die wenigstens in der Lage ist, eine Datenübertragungsverbindung zu einer zentralen Station (10) eines Notrufsystems aufzubauen. Um zu ermöglichen, dass die Position der Vorrichtung praktisch sofort nach dem Einschalten der Vorrichtung festgestellt werden kann, ist erfindungsgemäß vorgesehen, dass nach dem Aufbau einer Datenübertragungsverbindung zwischen der mobilen Vorrichtung (11) und der zentralen Station (10) für eine satellitengestützte Positionsbestimmung benötigte Basisdaten von der zentralen Station (10) zur mobilen Vorrichtung (11) übertragen werden und aus empfangenen Satellitendaten mittels der von der zentralen Station (10) übertragenen Basisdaten die aktuellen Positionsdaten der mobilen Vorrichtung (11) berechnet werden. Die Notrufvorrichtung (11) weist insbesondere einen Notrufschalter (29) auf, über den eine interne Spannungsversorgung (30) zum Einschalten der Steuereinheit und zum Aktivieren eines Notruf-Sendeprogramms mit dieser verbindbar ist.

## Beschreibung

Die Erfindung betrifft ein Verfahren zum Ermitteln der Position einer mobilen Vorrichtung, insbesondere einer Notrufvorrichtung, sowie ein Notrufsystem mit einer zentralen Station und wenigstens einer derartigen mobilen Notrufvorrichtung sowie eine Notrufvorrichtung selbst.

Mit Hilfe des satellitengestützten Positionfeststell- oder Ortungssystems GPS (Global Positioning System) ist es heutzutage praktisch überall auf der Welt möglich die Position oder geographische Lage mit Hilfe eines entsprechenden GPS-Moduls festzustellen. Das GPS-Modul empfängt hierzu ständig Ortungsinformationen von verschiedenen Satelliten und kann dadurch während des normalen Dauerbetriebs laufend seine Position feststellen.

Befindet sich jedoch ein derartiges Modul im ausgeschalteten Zustand an einem unbekannten Ort, so ist es nach dem Einschalten zunächst nicht in der Lage die aktuelle Position festzustellen, da zunächst aus den von den Satelliten empfangenen Satellitendaten Basisdaten bezüglich Uhrzeit, der Identität der einzelnen Satelliten, von denen Signale empfangen werden, und hinsichtlich der Satellitenbahnen aus den empfangenen Daten ermittelt werden müssen. Erst nach einer Startphase von mehreren Minuten ist es somit möglich, die genaue Position des GPS-Moduls festzustellen, nachdem es an einem unbekannten Ort eingeschaltet wurde. Eine derartig lange Wartezeit bis zur Positionsfeststellung ist allerdings für ein Notrufsystem, bei dem es im Notfall auf jede Minute ankommt, nicht akzeptabel.

Für Kraftfahrzeuge ist bereits ein Personen- und Fahrzeugsicherheitssystem bekannt, das eine mit einem GPS-Modul ausgerüstete Notrufvorrichtung umfaßt, die mit Hilfe eines GSM-Moduls (Groupe Speciale Mobile oder Globales System für Mobilkommunikation) über ein Mobilfunknetz eine Verbindung zu einer Zentrale herstellen kann. Im Notfall läßt sich durch Betätigen einer entsprechenden Taste die augenblickliche Position des Fahrzeugs, in dem die Notrufvorrichtung installiert ist, zur Zentrale des Systems übertragen und gleichzeitig eine Sprachverbindung aufbauen, so dass der Benutzer der Notrufvorrichtung der Zentrale die Art des Notfalls mitteilen kann.

Aus der DE 196 47 532 A1 ist bereits eine Vorrichtung zur Sicherung einer Wegstrecke bzw. eines Standortes von zu schützenden Personen, insbesondere Kindern, bekannt, bei dem die zu schützende Person eine Notrufvorrichtung bei sich trägt, die im Notfall bei Betätigung einer Notruftaste einen Notrufsender aktiviert, der über ein geeignetes Funknetz einen Notruf an einen Notrufempfänger überträgt, der den Notruf an einer Empfangsstation aufnimmt, anzeigt und/oder weitergibt. Um eine Ortung der zu schützenden Person im Notfall zu ermöglichen wird gleichzeitig mit dem Aufbau einer Funkverbindung ein in der Notrufvorrichtung eingebauter Sendequarz aktiviert, so dass die Vorrichtung mit Hilfe des vom Sendequarz ausgesendeten Signals geortet werden kann.

Ein wesentlicher Nachteil dieses Systems ist, dass der Ort, von dem aus der Notruf gesendet wurde, nur mit Hilfe einer entsprechend aufwendigen Funkortungsvorrichtung festgestellt werden kann, was eine erhebliche zeitliche Verzögerung zur Folge hat, die in einem Notfall, in dem jede eingesparte Minute bei der Einleitung von Rettungsmaßnahmen wesentlich sein kann, äußerst nachteilig ist.

Insbesondere zum Orten vermisster Kinder (DE-Z, Bella, Heft 33, 2001) ist es bekannt, einen Teddy mit einem speziellen Ortungssystem auszurüsten, das den Ort des Teddys mit einer Genauigkeit von bis zu 10 Metern über ein GSM-Mobiltelefonnetz an eine entsprechende Rufnummer der verzweifelten Eltern übertragen kann.

Ferner wurde bereits ein Notrufsender für Kinder vorgeschlagen, der auf Knopfdruck Alarm gibt oder automatisch, sobald sich das Kind zu weit vom Wohnort entfernt. Der Standort wird dabei mit Hilfe von Satelliten ermittelt. Dieser vorgeschlagene Notrufsender arbeitet also mit einem satellitengestützten Positionsfeststellungsmodul, das permanent eingeschaltet ist, und das demzufolge ständig Energie verbraucht. Somit muß das Gerät regelmäßig neu geladen oder mit einer neuen Batterie versehen werden.

Dieser bekannte Notrufsender bietet zwar den Vorteil, dass im Falle eines Notfalls die Position des Senders unmittelbar gemeldet werden kann. Jedoch besteht die Gefahr, dass durch den permanenten Energieverbrauch die interne Stromquelle des Senders zum Zeitpunkt eines Notfalls möglicherweise erschöpft ist, so dass kein Notruf mehr gesendet werden kann.

Davon ausgehend liegt der Erfindung die Aufgabe zugrunde, ein Verfahren zum Ermitteln der Position einer mobilen Vorrichtung, insbesondere einer Notrufvorrichtung bereitzustellen, das es ermöglicht die Position der Vorrichtung praktisch sofort nach dem Einschalten der Vorrichtung feststellen zu können, so dass auf den ständigen Betrieb eines satellitengestützten Positionsfeststellmoduls verzichtet werden kann.

Eine weitere Aufgabe der vorliegenden Erfindung ist es, ein Notrufsystem sowie eine in diesem System verwendbare Notrufvorrichtung bereitzustellen, mit dem bzw. der im Notfall eine schnelle Ortung der Notrufvorrichtung möglich ist, ohne dass diese permanent ihre Position ermitteln muß.

Diese Aufgaben werden durch das Verfahren nach Anspruch 1, das Notrufsystem nach Anspruch 7 und die mobile Notrufvorrichtung nach Anspruch 11 gelöst. Vorteilhafte Weiterbildungen und Ausgestaltungen der Erfindung sind in den jeweiligen nachgeordneten Unteransprüchen beschrieben.

Hinsichtlich des Verfahrens ist also erfindungsgemäß vorgesehen, dass sich nach dem Aufbau einer Datenübertragungsverbindung zwischen der mobilen Station und der zentralen Station in einem Notfall die für eine satellitengestützte Positionsbestimmung benötigten Basisdaten von der zentralen Station zur mobilen Vorrichtung übertragen werden, so dass in der mobilen Vorrichtung aus empfangenen Satellitendaten mittels der von der zentralen Station übertragenen Basisdaten die aktuelle Position augenblicklich bestimmt werden kann.

Durch das erfindungsgemäße Verfahren wird es also ermöglicht, dass nach dem Einschalten und Aufbauen einer Datenübertragungsverbindung der Ort, an dem sich die mobile Vorrichtung befindet, innerhalb kürzester Zeit (weniger als 30 Sekunden) auf 10 Meter genau feststellen läßt, ohne dass die Vorrichtung ständig eingeschaltet sein muß. Es läßt sich daher mit dem erfindungsgemäßen Verfahren erreichen, dass eine mobile Vorrichtung, insbesondere eine Notrufvorrichtung praktisch ohne Wartung über Jahre hinaus einsatzbereit ist. Werden beispielsweise Batterien in der mobilen Vorrichtung eingesetzt, deren Energie über mindestens sieben Jahre verfügbar ist, so kann unter Berücksichtigung eines Sicherheitsabschlags von zwei Jahren eine derartige Vorrichtung über fünf Jahre hinweg zuverlässig in Bereitschaft sein, da im Bereitschaftsbetrieb keine Energie verbraucht wird.

Um den Rechenaufwand bei der satellitengestützten Positionsbestimmung und damit auch den Zeitaufwand weiter zu verringern, ist es vorteilhafterweise vorgesehen, dass nach dem Aufbau einer Datenübertragungsverbindung zwischen der mobilen Vorrichtung und der zentralen Station zunächst eine ungefähre Position der mobilen Vorrichtung festgestellt wird und die für die satellitengestützte Positionsbestimmung benötigten Basisdaten entsprechend der ungefähren Position in der zentralen Station ermittelt werden. Die ungefähre Position der Vorrichtung läßt sich insbesondere dann einfach feststellen, wenn ein zellulares Mobilfunknetz von der mobilen Vorrichtung verwendet wird, um Datenübertragungsverbindung zur zentralen Station herzustellen.

Obwohl es grundsätzlich denkbar ist, dass zwar die für die satellitengestützte Positionsbestimmung benötigten Basisdaten von einer zentralen Station abgerufen werden, während der Notruf selbst direkt zu einem speziellen Rettungsdienst oder dergleichen geschickt wird, ist es bei einer zweckmäßigen Weiterbildung der Erfindung vorgesehen, dass die berechneten Positionsdaten der mobilen Vorrichtung zur zentralen Station übertragen werden, wobei beim Aufbau einer Datenübertragungsverbindung eine Teilnehmerkennung von der mobilen Vorrichtung zur zentralen Station übertragen wird.

Auf diese Weise läßt sich in der zentralen Station zusammen mit dem Ort des Notfalls auch feststellen, wer in eine Notlage geraten ist, wenn als Teilnehmerkennung insbesondere eine weltweit eindeutige Nummer verwendet wird, die vorzugsweise hardwaremäßig in der mobilen Vorrichtung codiert ist und der in der zentralen Station die persönlichen Daten des Teilnehmers eindeutig zugeordnet sind.

Um unterscheiden zu können, ob das erfindungsgemäße Verfahren zum Auslösen eines Notrufs oder aus einem anderen Grunde, beispielsweise zum Testen der mobilen Vorrichtung durchgeführt werden soll, ist vorteilhafterweise vorgesehen, dass beim Aufbau einer Datenübertragungsverbindung eine Rufartkennung von der mobilen Vorrichtung zur zentralen Station übertragen wird.

Die Verwendung einer Rufartkennung macht es ferner möglich, das erfindungsgemäße Verfahren auch mit Vorrichtungen zu verwenden, die beispielsweise einem Benutzer nicht nur die Möglichkeit eines Notrufs sondern auch die Möglichkeit einer Ermittlung seiner aktuellen geographischen Position schnell und zuverlässig ermöglicht, ohne dass die Vorrichtung im Dauerbetrieb arbeiten muß oder dass ein Benutzer unnötig lange auf ein Ortungsergebnis warten muß.

Eine zweckmäßige Weiterbildung der Erfindung zeichnet sich dadurch aus, dass in der zentralen Station aufgrund der Rufartkennung zwischen Not- und Testrufen unterschieden wird, und dass jeder Aufbau einer Datenübertragungsverbindung zusammen mit der jeweiligen Rufart in der zentralen Station zur Dokumentation gespeichert wird. Hierdurch ist es möglich in der zentralen Station die verbleibende Batteriekapazität aufgrund der Anzahl und Dauer der durchgeführten Testrufe abschätzen zu können, so dass ein Benutzer informiert werden kann, wenn die Batterie seiner Notrufvorrichtung aufgrund der Testrufe zu schwach geworden sein könnte.

Bei einer weiteren zweckmäßigen Ausgestaltung der Erfindung ist vorgesehen, dass die zur satellitengestützten Positionsbestimmung benötigten Basisdaten in der zentralen Station ständig anhand von von Satelliten empfangenen Daten aktualisiert werden.

In besonders vorteilhafter Weise läßt sich das erfindungsgemäße Verfahren in einem Notrufsystem mit einer zentralen Station und wenigstens einer, vorzugsweise jedoch einer Vielzahl von mobilen Notrufvorrichtungen einsetzen, die zum Senden eines Rufs über wenigstens eine Datenübertragungsverbindung mit der zentralen Station verbindbar sind, um einen mittels eines satellitengestützten Positionsbestimmungssystems ermittelten Standort der mobilen Notrufvorrichtung zur zentralen Station zu übertragen. Die zentrale Station umfaßt dabei ein Eingangsmodul zum Empfangen von Satellitendaten und zum Bestimmen von Basisdaten, die für eine satellitengestützte Positionsbestimmung benötigt werden, eine Eingangs-Ausgangs-Einheit zum Empfangen eines Rufs von und zum Datenaustausch mit einer Notrufvorrichtung, eine Ausgabeeinheit zum Ausgeben von einen Notruf betreffenden Daten sowie eine zentrale Steuereinheit, die einen Datenaustausch zwischen der zentralen Station und einer mobilen Notrufvorrichtung über die Datenübertragungsverbindung sowie die Ausgabe der einen Notruf betreffenden Daten steuert, während die Notrufvorrichtung wenigstens ein satellitengestütztes Positionsfeststellmodul sowie eine Sender-Empfänger-Einheit aufweist, um die aktuellen Positionsdaten zu Bestimmen und zur zentralen Station zu übertragen.

Um von der zentralen Station aus einer Rettungszentrale, einer zum Notfallort nächstgelegenen Rettungs- oder Hilfsstation, beispielsweise dem nächstgelegenen Polizeirevier nicht nur den Ort und die Tatsache eines Notfalls mitteilen zu können, ist bei einer vorteilhaften Weiterbildung der Erfindung vorgesehen, dass die zentrale Station eine Teilnehmerdatenbank für teilnehmerspezifische Daten sowie eine Datenbank für Rufnummern und/oder Verbindungsadressen von Rettungs- und/oder Hilfsdienststationen aufweist.

Besonders vorteilhaft ist es, wenn die Ausgabeeinheit der zentralen Station eine weitere Sender-Empfänger-Einheit umfasst, um einen eingehenden Notruf an eine entsprechende Rettungs- und/oder Hilfsdienstzentrale weiterzuleiten, wobei die Ausgabeeinheit der zentralen Station eine Anzeigeeinheit zum Anzeigen von Informationen bezüglich eines eingegangen Notrufs aufweist.

Um im Falle eines Notrufs dem Benutzer, der sich in einer Notlage befindet, die Möglichkeit zu geben, der Notrufzentrale die Art seiner Notlage mitzuteilen, ist bei einer anderen Ausgestaltung der Erfindung vorgesehen, dass die zentrale Station und die Notrufvorrichtung jeweils mit einer Sprech-Hör-Einrichtung ausgerüstet sind, so dass über die Eingangs-Ausgangs-Einheit und die Sender-Empfänger-Einheit eine Sprachübertragungsverbindung aufbaubar ist.

Eine in dem erfindungsgemäßen Notrufsystem vorteilhafterweise einsetzbare mobile Notrufvorrichtung umfaßt ein satellitengestütztes Positionsfeststellmodul, eine Sender-Empfänger-Einheit zum Aufbau einer Datenübertragungsverbindung zu einer zentralen Station, eine zentrale Steuereinheit, die den Aufbau einer Datenübertragungsverbindung zu der zentralen Station und einen Datenaustausch mit der zentralen Station steuert, sowie einen Notrufschalter, über den eine interne Spannungsversorgung zum Einschalten der Steuereinheit und zum Aktivieren eines Notruf-Sendeprogramms mit dieser verbindbar ist.

Durch die Verwendung eines einzigen Notrufschalters, der nicht nur die interne Spannungsversorgung einschaltet und damit die Notrufvorrichtung in Bereitschaft versetzt, sondern der gleichzeitig auch ein Notruf-Sendeprogramm aktiviert, wird es möglich, eine Notrufvorrichtung bereitzustellen, die bei entsprechender Einbindung in ein Notrufsystem ihren Benutzern, die sich in einer Notsituation befinden, die Möglichkeit schafft, innerhalb von Sekunden, ohne nachzudenken, die Möglichkeit eines Notrufs gibt. Da nur ein einziger Schalter zu betätigen ist, kann die Vorrichtung von einem Benutzer auch in einer Stress- oder Paniksituation schnell und sicher aktiviert werden.

Zweckmäßigerweise ist vorgesehen, dass dem satellitengestützten Positionsfeststellmodul von der zentralen Steuereinheit Basisdaten zuführbar sind, die für eine satellitengestützte Positionsbestimmung benötigt werden.

Um die erfindungsgemäße Notrufvorrichtung nicht nur zum Auslösen eines Notrufs an eine entfernte Rettungsdienstzentrale oder Polizeistation sondern auch zum Herbeirufen von Hilfe im Umkreis des Notfallortes sowie zum Abschrecken von Angreifern einsetzen zu können, ist bei einer besonders bevorzugten Ausführungsform vorgesehen, dass eine Alarmsirene vorgesehen ist, die über den Notschalter gleichzeitig mit der Aktivierung des Notruf-Sendeprogramms einschaltbar ist, wobei der Notrufschalter so ausgebildet ist, dass nach dem Einschalten der Spannungsversorgung diese nicht mehr abschaltbar ist.

Mit Hilfe der erfindungsgemäß integrierten Alarmsirene wird die erfindungsgemäße Notrufvorrichtung einerseits zu einer Art Verteidigungsgerät, das im Falle eines Überfalls aktiviert werden kann, und das dann in sehr vielen Fällen einen Täter, der seine Tat üblicherweise geheimhalten will, abschreckt, da er um seine Entdeckung fürchten muß. Andererseits dient das mittels der Alarmsirene ausgesendete akustische Signal auch als Hilferuf, der das Auffinden einer in eine Notsituation geratenen Person erleichtert. Insbesondere für den Fall, dass die Notrufvorrichtung als akustische Waffe gegen einen Angreifer eingesetzt wird, verhindert die Nichtabschaltbarkeit der Notrufvorrichtung die Unterbrechung des Notrufs durch den Täter.

Da die erfindungsgemäße Notrufvorrichtung im Normalfall ein ständiger Begleiter ist, der jedoch über Jahre hinweg nicht benötigt wird, ist es zweckmäßig, wenn vorgesehen ist, dass ein Testschalter, über den die interne Spannungsversorgung zum Einschalten der Steuereinheit und zum Aktivieren eines Testruf-Sendeprogramms mit dieser verbindbar ist, und eine Ausgabeeinrichtung vorgesehen sind, die ein die Funktionfähigkeit der Vorrichtung anzeigendes Signal ausgibt. Auf diese Weise wird es einem Benutzer ermöglicht, von Zeit zu Zeit die Notrufvorrichtung zu testen, so dass das Vertrauen des Benutzers in die Notrufvorrichtung stets erhalten bleibt.

Die Erfindung wird im folgenden beispielsweise anhand der Zeichnung näher erläutert. Es zeigen:
Fig. 1 eine schematische vereinfachte Darstellung zur Erläuterung des Aufbaus eines erfindungsgemäßen Notrufsystems,
Fig. 2 ein schematisches vereinfachtes Blockschaltbild einer erfindungsgemäßen Notrufvorrichtung und
Fig. 3 ein schematisches vereinfachtes Blockschaltbild einer zentralen Station des erfindungsgemäßen Notrufsystems.

In den verschiedenen Figuren der Zeichnung sind einander entsprechende Bauteile mit gleichen Bezugszeichen versehen.

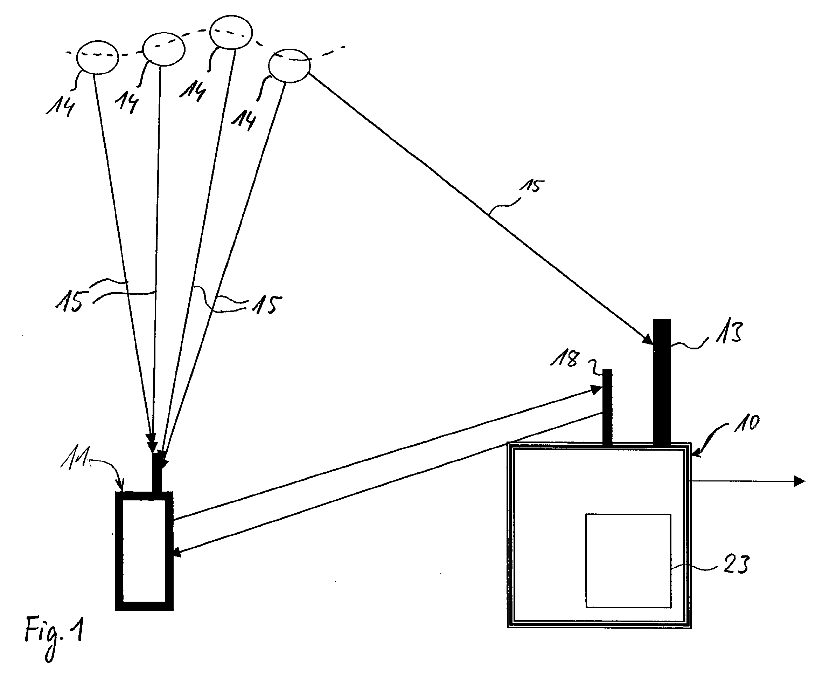

Wie in Figur 1 dargestellt ist, weist das erfindungsgemäße Notrufsystem eine zentrale Station 10 und vorzugsweise eine Vielzahl von mobilen Notrufvorrichtungen 11 auf, von denen nur eine dargestellt ist. Die zentrale Station 10 umfaßt, ein Eingangsmodul 12 mit einer entsprechenden Antenne 13 zum Empfangen von Satellitendaten, die von einer Vielzahl von Satelliten 14 ausgesendet werden, wie in Figur 1 durch die entsprechende Übertragungswege andeutenden Pfeile 15 veranschaulicht ist. Die Satelliten 14 gehören zu einem satellitengestützten Ortungssystem, beispielsweise zu dem heutzutage vorzugsweise eingesetzten GPS-System.

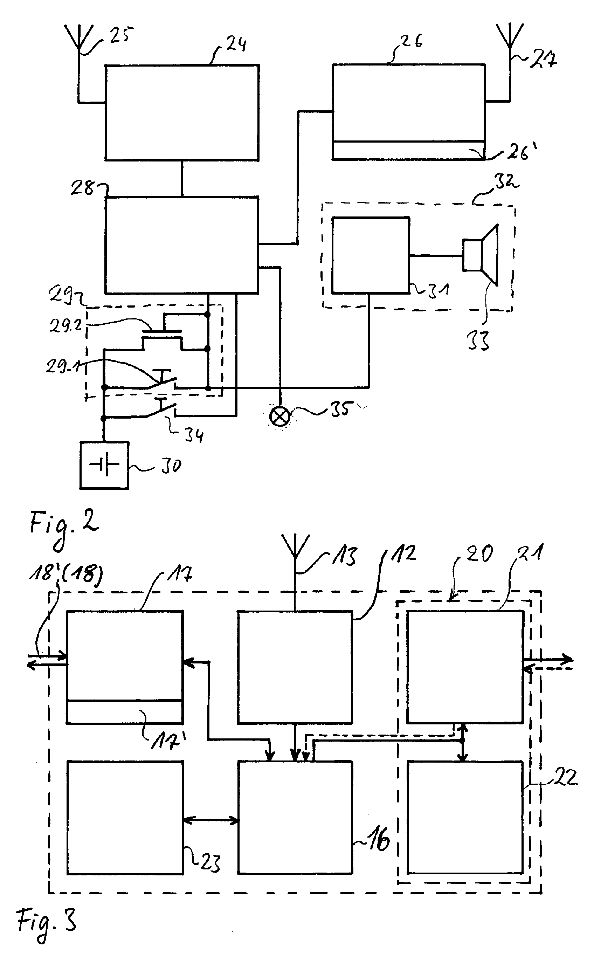

Das Eingangsmodul, das bei Einsatz des GPS-Systems ein GPS-Modul 12 ist, und das aus den empfangenen Satellitendaten Basisdaten ermittelt, die für eine satellitengestützte Positionsbestimmung benötigt werden, ist entsprechend Figur 3 mit einer zentralen Steuereinheit 16 verbunden, die einen Datenaustausch zwischen der zentralen Station 10 und einer der Notrufvorrichtungen 11 über eine Eingangs-Ausgangs-Einheit 17 steuert. Die Eingangs-Ausgangs-Einhelt 17 kann dabei ein Mobilfunkmodul mit einer Antenne 18 sein, das über ein GSM-Mobilfunknetz mit den einzelnen Notrufvorrichtungen 11 kommunizieren kann. Anstelle eines GSM-Moduls kann als Eingangs-Ausgangs-Einheit 17 auch ein geeignetes Festnetzmodul vorgesehen sein, das mit einem entsprechenden Festnetz über einen Eingangs-Ausgangs-Anschluß 18' verbunden ist. Der Eingangs-Ausgangs-Einheit 17 kann gemäß einem spezifischen Ausführungsbeispiel der Erfindung eine Sprech-Hör-Einrichtung 17' zugeordnet sein, so dass ein Sprachverbindung über das Mobilfunk- oder Festnetz ermöglicht wird.

Zum Ausgeben von einen Notruf betreffenden Daten ist in der zentralen Station 10 ferner eine Ausgabeeinheit 20 vorgesehen, die eine weitere Sender-Empfänger-Einheit 21 sowie eine Anzeigeeinheit 22 aufweist. Die Sender-Empfänger-Einheit 21 kann dabei entweder ein Festnetzmodul sein, um eine Verbindung zu verschiedenen Rettungs- und/oder Hilfsdientzentralen oder zu lokalen Rettungs- oder Polizeistationen über ein Festnetz aufbauen zu können. Die Sender-Empfänger-Einheit kann aber auch ein Mobilfunkmodul sein, das nach dem GSM-Standard oder einem anderen gegenwärtig oder zukünftig gebräuchlichen Standard, beispielsweise dem UMTS-Standard arbeitet. Die Notfalldaten können auch durch eine geeignete Sender-Empfänger-Einheit 21 in ein Datennetz, z.B. das Internet, zum Abruf durch Rettungsund Hilfsdienste eingespeist werden.

Die Anzeigeeinheit 22 ist vorzugsweise so ausgelegt, dass sie den Ort des Notrufs kartographisch darstellen kann, wobei gleichzeitig Informationen über den Notrufgeber angezeigt werden können, die in einer entsprechenden Datenbank 23 der zentralen Station 10 gespeichert sind, und die von der zentralen Steuereinheit im Falle eines Notrufs an die Anzeigeeinheit 22 übertragen werden.

Wie am besten in Figur 2 zu erkennen ist, umfaßt die erfindungsgemäße Notrufvorrichtung ein satellitengestütztes Positionfeststellmodul 24, das beispielsweise ein GPS-Modul mit einer entsprechenden Antenne 25 ist, eine Sender-Empfänger-Einheit 26, die beispielsweise ein Mobilfunkmodul, insbesondere ein GSM-Modul mit einer entsprechenden Antenne 27 ist, einen zentrale Steuereinheit 28, die den Aufbau einer Datenübertragungverbindung zu der zentralen Station 10 des Notrufsystems und einem Datenaustausch mit dieser steuert, sowie einen Notrufschalter 29, über den eine interne Spannungsversorgung 30 mit der Steuereinheit 28 verbindbar ist, um diese mit Spannung zu versorgen und ein Notruf-Sendeprogramm zu aktivieren. Der Notrufschalter 29 ist ausgangsseitig ferner mit einem Treiber 31 einer Alarmsirene 32 verbunden, der einen entsprechenden elektroakustischen Wandler oder Lautsprecher 33 beaufschlagt. Der Sender-Empfänger-Einheit 26 kann gemäß einem spezifischen Ausführungsbeispiele der Erfindung eine Sprech-Hör-Einrichtung 26' zugeordnet sein, so dass ein Sprachverbindung ermöglicht wird. Die Sender-Empfänger-Einheit 26 ist dabei vorzugsweise so ausgebildet, dass die Notrufvorrichtung 11 nicht nur in einem GSM-Netz sondern auch in einem beliebigen - vorzugsweise zellularen - Mobilfunknetz arbeiten kann.

Um einen Testlauf der erfindungsgemäßen Notrufvorrichtung 11 zu ermöglichen, kann ferner ein Testschalter 34 vorgesehen sein, der die zentrale Steuereinheit 28 über einen anderen Eingang als der Notrufschalter 29 mit der internen Spannungsversorgung 30 verbindet, um ein Test-Sendeprogramm zu aktivieren. Als Ausgabeeinrichtung 35 für ein die Funktionsfähigkeit der Notrufvorrichtung anzeigendes Signal kann eine Anzeigelampe oder -diode vorgesehen sein.

Um nach dem Aktivieren der Notrufvorrichtung mittels des Notfallschalters ein Abschalten zuverlässig zu verhindern, umfaßt der Notrufschalter 29 neben einem Noteinschalter 29.1 einen Selbsthalteschalter 29.2, der beispielsweise als Feldeffekttransistor ausgebildet sein kann.

Soll die erfindungsgemäße Vorrichtung beispielsweise auch zur schnellen und zuverlässigen Ermittlung der aktuellen geographischen Position seines Benutzers verwendbar sein, so wäre eine weitere Spannungsversorgung (nicht dargestellt) erforderlich, die über einen ebenfalls nicht dargestellten weiteren Schalter zu aktivieren wäre. Ferner wäre eine (nicht dargestellte) Anzeigeoder Ansageeinrichtung erforderlich, um die ermittelte Position nach erfolgter Ortung auszugeben. Auch diese Einrichtungen müßten von der weiteren Spannungsversorgung gespeist werden, um die Haupt- oder Notruf-Spannungsversorgung nur für Not- und Testrufe zu nutzen.

Im folgenden wird die Funktionsweise des erfindungsgemäßen Notrufsystems näher erläutert.

In einer Notfallsituation wird die erfindungsgemäße Notrufvorrichtung von einer in der Notsituation befindlichen Person mittels des Notfallschalters gleichzeitig eingeschaltet und aktiviert. Der Notfallschalter 29 ist dabei so ausgebildet, dass der Noteinschalter 29.1 ohne hinzusehen gefühlt und ausgelöst werden kann. Nachdem mit dem Notrufschalter 29 die Spannungsversorgung der Notrufvorrichtung eingeschaltet ist, ertönt von der Alarmsirene 32 ein Alarmsignal, das vorzugsweise extrem schrill ist, so dass durch diesen Alarmton im Falle eines Überfalls ca. 60% aller Angreifer abgewehrt werden können. Gleichzeitig mit dem Auslösen des Alarmsignals wird ein Notruf-Sendeprogramm aktiviert.

Dazu wird zunächst das als Sender-Empfänger-Einheit dienende Mobilfunkmodul 26 eingeschaltet und aktiviert, um eine Datenübertragungsverbindung zur zentralen Station 10 über die jeweils zum Einsatz kommenden Kommunikationsnetze aufzubauen. Gleichzeitig startet das GPS-Modul 24 den Empfang von Satellitendaten, die von entsprechenden Satelliten empfangen werden.

Nach dem Aufbau der Datenübertragungverbindung zur zentralen Station wird von der Notrufvorrichtung eine Teilnehmerkennung übertragen, die vorzugsweise hardwaremäßig in der Notrufvorrichtung gespeichert ist und die dem Benutzer der Notrufvorrichtung eindeutig zugeordnet ist.

Für den Fall, dass die Notrufvorrichtung auch mit einer Testfunktion ausgerüstet ist, kann gleichzeitig mit dem Verbindungsaufbau auch ein Rufartsignal übertragen werden, das anzeigt, ob es sich um einen Notruf oder einen Testlauf handelt. Es ist jedoch auch denkbar, ein derartiges Rufartsignal nur dann zu übertragen, wenn ein Testlauf durchgeführt werden soll, so dass in der zentralen Station das Fehlen des Rufartsignals als Anzeige eines Notrufs erkannt wird.

Nach dem Aufbau der Datenübertragungsverbindung werden von der zentralen Station aktuelle Basisdaten, die für eine Positionsbestimmung im GPS-Modul benötig werden, die Uhrzeit und vorzugsweise auch die ungefähre Position der erfindungsgemäßen Notrufvorrichtung an diese übertragen. Die ungefähre Position der Notrufvorrichtung läßt sich bei einer Datenübertragungverbindung, die mit Hilfe eines zellularen Mobilfunknetzes hergestellt wurde, durch die Feststellung der Mobilfunkzelle erhalten, in der sich die Notrufvorrichtung befindet.

Nachdem also die Basisdaten für die satellitengestützte Positionsbestimmung von der zentralen Station zur mobilen Notrufvorrichtung und damit zum GPS-Modul übertragen wurden, kann das GPS-Modul 24 der Notrufvorrichtung 11 aus den empfangenen Satellitendaten die genauen Positionsdaten der Notrufvorrichtung berechnen.

Nachdem also die Ortung in der Notrufvorrichtung durchgeführt wurde, wird dann die Position an die zentrale Station weitergeleitet.

Bei der Übertragung der Basisdaten für die Berechnung der aktuellen Position können diese entsprechend der ungefähren Position der Notrufvorrichtung ausgewählt werden.

Nachdem die Teilnehmerkennung der Notrufvorrichtung 11 und die aktuelle Position zur zentralen Station 10 übertragen wurde, kann in der zentralen Station zunächst der Ort, von dem der Notruf gesendet wurde, kartographisch dargestellt werden. Gleichzeitig werden aus der Teilnehmer-Datenbank 23 die der Teilnehmerkennung zugeordneten Teilnehmerdaten ausgelesen und vorzugsweise ebenfalls angezeigt.

Für den Fall, dass sowohl die zentrale Station 10 als auch die Notrufvorrichtung 11 jeweils mit einer Sprech-Hör-Einrichtung 17', 26' ausgerüstet sind, wird gleichzeitig mit dem Aufbau Datenübertragungsverbindung ein Sprachverbindung aufgebaut, so dass der Benutzer auch weitere Informationen über seine Notlage der zentralen Station 10 mitteilen kann.

Aufgrund der nunmehr vorliegenden Informationen über den Teilnehmer, der den Notruf auslöste, können nunmehr verschiedene Stellen, wie beispielsweise die Eltern, die Firma, Verwandte, Ehegatten, die Polizei und/oder andere Rettungs- und Hilfsdienste von dem Notruf in Kenntnis gesetzt werden.

Insbesondere ist es dabei möglich, den Notruf zu einer Polizei- oder Hilfsdienststation weiterzuleiten, die sich am nächsten zum Ort des Notrufs befindet. Auf diese Weise läßt sich die Zeit zwischen dem Aussenden des Notrufs und dem Eintreffen von Hilfe auf ein Minimum reduzieren.

Da die Notrufvorrichtung 11 zwangsweise so lange weiterarbeitet bis die interne Stromversorgung, die vorzugsweise von einer entsprechenden Batterie gebildet wird, verbraucht ist, kann in dieser Zeit festgestellt werden, ob sich die Notrufvorrichtung bewegt oder stationär bleibt. Somit ist es auch möglich, die Polizei oder alarmierte Rettungsdienste weiterhin über den aktuellen Ort der sich in einer Notsituation befindenden Person zu informieren.

Im Falle eines Testrufs zum Überprüfen der Notrufvorrichtung 11 wird anstelle des Notrufschalters 29 der Testrufschalter 34 betätigt, um daraufhin die Datenübertragungsverbindung zur zentralen Station 10 aufzubauen und um anschließend nach der Übertragung der Basisdaten die aktuelle Position anhand von Satellitendaten zu ermitteln. Abgesehen davon, dass beim Testen der Notrufvorrichtung 10 die Alarmsirene 32 nicht betätigt wird, und auch kein Notruf weitergeleitet wird, ist der Verfahrensablauf im wesentlichen der gleiche wie oben für den Fall eines Notrufs beschrieben. Nachdem die Notrufvorrichtung 11 ihre ermittelte Position an die zentrale Station 10 übertragen hat, sendet die zentrale Station 10 ein die einwandfreie Funktion der Notrufvorrichtung anzeigendes Signal an die Notrufvorrichtung 11 zurück, das über die Ausgabeeinrichtung 35, die beispielsweise eine grüne Leuchtdiode oder dergleichen sein kann, angezeigt wird.

In der zentralen Station wird dann nach der Behandlung des Testrufs der Testruf als solcher für die spezifische Notrufvorrichtung registriert, so daß über die Anzahl und Dauer der durchgeführten Testrufe die verbleibende Kapazität der Batterie 30 der Notrufvorrichtung 11 abgeschätzt werden kann. Damit wird es ermöglicht, die Funktionsfähigkeit der einzelnen im Notrufsystem eingesetzten Notrufvorrichtungen 11 ständig zu überwachen und einem Benutzer rechtzeitig mitzuteilen, dass die Batterie seiner Notrufvorrichtung nicht mehr die für eine ordnungsgemäße Funktion im Notfall erforderliche Kapazität besitzt und dass die Batterie daher auszutauschen ist.

Aufgrund des erfindungsgemäßen Verfahrens zum Ermitteln der Position einer mobilen Vorrichtung, also der Position der Notrufvorrichtung wird es ermöglicht, eine Notrufvorrichtung für ein Notrufsystem bereitzustellen, die nicht nur extrem einfach zu bedienen ist, sondern die auch über eine lange Zeit einsatzbereit bleibt, da die Vorrichtung normalerweise passiv ist und somit keine Energie verbraucht während sie nur im Notfall aktiviert wird. Trotzdem läßt sich aufgrund des erfindungsgemäßen Verfahrens zur Positionsbestimmung die Position der Vorrichtung in kurzer Zeit so schnell ermitteln, dass der Notfallort bereits 10 bis 15 Sekunden nach Auslösen des Notfallsignais in der Zentrale des Notrufsystems bekannt ist und an einen geeigneten Rettungs- oder Hilfsdienst weitergeleitet werden kann.

## Patentansprüche

1. Verfahren zum Ermitteln der Position einer mobilen Vorrichtung, insbesondere einer Notrufvorrichtung (11), die ein satellitengestütztes Positionsfeststellmodul (24) sowie eine Sender-Empfänger-Einheit (26) aufweist, die wenigstens in der Lage ist, eine Datenübertragungsverbindung zu einer zentralen Station (10) aufzubauen, bei dem
- nach dem Aufbau einer Datenübertragungsverbindung zwischen der mobilen Vorrichtung (11) und der zentralen Station (10) für eine satellitengestützte Positionsbestimmung benötigte Basisdaten von der zentralen Station (10) zur mobilen Vorrichtung (11) übertragen werden und
- aus empfangenen Satellitendaten mittels der von der zentralen Station (10) übertragenen Basisdaten die aktuellen Positionsdaten der mobilen Vorrichtung (11) berechnet werden.

2. Verfahren nach Anspruch 1, **dadurch gekennzeichnet, dass**
- nach dem Aufbau einer Datenübertragungsverbindung zwischen der mobilen Vorrichtung (11) und der zentralen Station (10) zunächst eine ungefähre Position der mobilen Vorrichtung (11) festgestellt wird und
- die für die satellitengestützte Positionsbestimmung benötigten Basisdaten entsprechend der ungefähren Position in der zentralen Station (10) ermittelt werden.

3. Verfahren nach Anspruch 1 oder 2, **dadurch gekennzeichnet, dass** die berechneten Positionsdaten der mobilen Vorrichtung (11) zur zentralen Station (10) übertragen werden.

4. Verfahren nach einem der vorstehenden Ansprüche, **dadurch gekennzeichnet, dass** beim Aufbau einer Datenübertragungsverbindung eine Teilnehmerkennung von der mobilen Vorrichtung (11) zur zentralen Station (10) übertragen wird.

5. Verfahren nach einem der vorstehenden Ansprüche, **dadurch gekennzeichnet, dass** beim Aufbau einer Datenübertragungsverbindung eine Rufartkennung von der mobilen Vorrichtung (11) zur zentralen Station (10) übertragen wird.

6. Verfahren nach Anspruch 5, **dadurch gekennzeichnet, dass** in der zentralen Station (10) aufgrund der Rufartkennung zwischen Not- und Testrufen unterschieden wird, und dass jeder Aufbau einer Datenübertragungsverbindung zusammen mit der jeweiligen Rufart in der zentralen Station (10) zur Dokumentation gespeichert wird.

7. Verfahren nach einem der vorstehenden Ansprüche, **dadurch gekennzeichnet, dass** die zur satellitengestützten Positionsbestimmung benötigten Basisdaten in der zentralen Station (10) ständig anhand von von Satelliten (14) empfangenen Daten aktualisiert werden.

8. Notrufsystem mit einer zentralen Station (10) und wenigstens einer mobilen Notrufvorrichtung (11), die zum Senden eines Rufs über wenigstens eine Datenübertragungsverbindung mit der zentralen Station (10) verbindbar ist, um einen mittels eines satellitengestützten Positionsbestimmungssystems ermittelten Standort der mobilen Notrufvorrichtung (11) zur zentralen Station zu übertragen,
wobei die zentrale Station
- ein Eingangsmodul (12) zum Empfangen von Satellitendaten und zum Bestimmen von Basisdaten, die für eine satellitengestützte Positionsbestimmung benötigt werden,
- eine Eingangs-Ausgangs-Einheit (17) zum Empfangen eines Rufs von und zum Datenaustausch mit einer Notrufvorrichtung (11),
- eine Ausgabeeinheit (20) zum Ausgeben von einen Notruf betreffenden Daten sowie
- eine zentrale Steuereinheit (16) aufweist, die einen Datenaustausch zwischen der zentralen Station (10) und einer mobilen Notrufvorrichtung (11) über die Datenübertragungsverbindung sowie die Ausgabe der einen Notruf betreffenden Daten steuert,
und wobei die Notrufvorrichtung (11) wenigstens
- ein satellitengestütztes Positionsfeststellmodul (24) sowie
- eine Sender-Empfänger-Einheit (26) aufweist, um die aktuellen Positionsdaten zu Bestimmen und zur zentralen Station (10) zu übertragen.

9. Notrufsystem nach Anspruch 8, **dadurch gekennzeichnet, dass** die zentrale Station (10) eine Teilnehmerdatenbank (23) für teilnehmerspezifische Daten sowie eine Datenbank für Rufnummern und/oder Verbindungsadressen von Rettungs- und/oder Hilfsdienstzentralen aufweist.

10. Notrufsystem nach Anspruch 8 oder 9, **dadurch gekennzeichnet, dass** die Ausgabeeinheit (20) der zentralen Station (10) eine weitere Sender-Empfänger-Einheit (21) umfasst, um einen eingehenden Notruf an eine entsprechende Rettungs- und/oder Hilfsdienstzentrale weiterzuleiten.

11. Notrufsystem nach Anspruch 8, 9 oder 10, **dadurch gekennzeichnet, dass** die Ausgabeeinheit (20) der zentralen Station (10) eine Anzeigeeinheit (22) zum Anzeigen von Informationen bezüglich eines eingegangen Notrufs umfaßt.

12. Notrufsystem nach einem der Ansprüche 8 bis 11, **dadurch gekennzeichnet, dass** die zentrale Station (10) und die Notrufvorrichtung (11) jeweils mit einer Sprech-Hör-Einrichtung (17', 26') ausgerüstet sind, so dass über die Eingangs-Ausgangs-Einheit (17) und die Sender-Empfänger-Einheit (26) eine Sprachübertragungsverbindung aufbaubar ist.

13. Mobile Notrufvorrichtung, insbesondere zur Verwendung in einem Notrufsystem nach einem der Ansprüche 8 bis 12, mit
- einem satellitengestützten Positionsfeststellmodul (24),
- einer Sender-Empfänger-Einheit (26) zum Aufbau einer Datenübertragungsverbindung zu einer zentralen Station (10),
- einer zentralen Steuereinheit (28), die den Aufbau einer Datenübertragungsverbindung zu der zentralen Station und einen Datenaustausch mit der zentralen Station steuert, sowie
- einem Notrufschalter (29), über den eine interne Spannungsversorgung (30) zum Einschalten der Steuereinheit und zum Aktivieren eines Notruf-Sendeprogramms mit dieser verbindbar ist.

14. Notrufvorrichtung nach Anspruch 13, **dadurch gekennzeichnet, dass** dem satellitengestützten Positionsfeststellmodul (24) von der zentralen Steuereinheit (28) Basisdaten zuführbar sind, die für eine satellitengestützte Positionsbestimmung benötigt werden.

15. Notrufvorrichtung nach Anspruch 13 oder 14, **dadurch gekennzeichnet, dass** eine Alarmsirene (32) vorgesehen ist, die über den Notschalter (29) gleichzeitig mit der Aktivierung des Notruf-Sendeprogramms einschaltbar ist.

16. Notrufvorrichtung nach Anspruch 13, 14 oder 15, dadurch gekennzeichnet, dass der Notrufschalter (29) so ausgebildet ist, dass nach dem Einschalten der Spannungsversorgung diese nicht abschaltbar ist.

17. Notrufvorrichtung nach einem der vorstehenden Ansprüche, **dadurch gekennzeichnet, dass** ein Testschalter, über den die interne Spannungsversorgung zum Einschalten der Steuereinheit und zum Aktivieren eines Testruf-Sendeprogramms mit dieser verbindbar ist, und eine Ausgabeeinrichtung vorgesehen sind, die ein die Funktionfähigkeit der Vorrichtung anzeigendes Signal ausgibt.
